Europäisches Patentamt

**European Patent Office**

Office européen des brevets

(11) Publication number: **0 234 326**
A2

(12) **EUROPEAN PATENT APPLICATION**

(21) Application number: 87101251.4

(22) Date of filing: 29.01.87

(51) Int. Cl.³: **G 02 B 6/38**
**G 02 B 6/28**

(30) Priority: 24.02.86 US 833635

(43) Date of publication of application:
02.09.87 Bulletin 87/36

(84) Designated Contracting States:
DE FR GB IT NL SE

(71) Applicant: ALLIED CORPORATION
Columbia Road and Park Avenue P.O. Box 2245R (Law Dept.)
Morristown New Jersey 07960(US)

(72) Inventor: Corke, Michael
1865 Brentwood Lane
Wheaton, IL 60187(US)

(72) Inventor: Kale, Billy Michael
30 Douglas Lane
Ridgefield, CT 06877(US)

(72) Inventor: Keur, Michael Robert
7138 Lill
Niles, IL 69648(US)

(72) Inventor: Moore, James Elton
2016 Chatham
Wheaton, IL 60187(US)

(72) Inventor: McAleer, Fred Bernard, Jr.
6532 68th Avene
So. Richfield, MN 55432(US)

(72) Inventor: Kopera, Paul Michael
10 Altoona Court
Vernon Hills, IL 60061(US)

(72) Inventor: Shaklee, Kerry Lee
297 Wheeler Park Avenue
Fairfield, CT 06432(US)

(72) Inventor: Sweeney, Kevin Lee
1695 Briarcliff Boulevard Apt., K
Wheaton, IL 60187(US)

(72) Inventor: Price, Robert Howe
28 W275 Indian Knoll
W. Chicago, IL(US)

(74) Representative: Wagner, Karl H.
WAGNER & GEYER Patentanwälte
Gewuerzmuehlstrasse 5 Postfach 246
D-8000 München 22(DE)

(54) Single mode optical fiber coupler and method of manufacture thereof.

(57) The invention relates to a single mode fiber optic coupler and method of manufacture thereof. The coupler comprises two single mode fibers positioned side by side which are fused in a manner such that they taper down into a substantially circular cross-section coupling region wherein the two cores of the fibers run therethrough. The method of manufacture involves employing a laser source to heat the fibers and a ceramic member. The fiber pair is scanned over the ceramic member to cause the fusion of the two fibers into a single member. Thereafter, while continuing heating and scanning, an axial tension is applied by drawing apart the fibers to form the uniform substantially cylindrical region of coupling which is of reduced cross-section relative to the total cross-sectional area of the two individual fibers.

Fig. 4b

## SINGLE MODE OPTICAL FIBER COUPLER
## AND METHOD OF MANUFACTURE THEREOF

This invention is related to the invention disclosed in copending concurrently filed application (Attorney Docket FOP-86-002) of Michael Corke et al., which disclosure is specifically incorporated by reference herein.

## Background of the Invention

This invention relates to a single mode optical fiber coupler and to the method of manufacture thereof.

More particularly, the invention relates to a coupler and method of manufacture wherein a laser heat source is employed with a scanning system to fuse two single mode fibers together to result in a single mode coupler which performs with very low losses.

It is desirable to employ single mode waveguides and coupling devices therefor because a straightforward light path is provided therein. Hereinafter the terms "waveguide" and "fiber" shall be used interchangeably and refers to the core of the fiber surrounded by its cladding. A single mode waveguide is understood to be a waveguide which conducts or can conduct only a single mode of light. Typically, these waveguides are glass fibers which are very small in diameter. Typically, the size of the core of these fibers is on the order of 5-10 microns or less. This compares with the relatively large core size of multimode fibers which are typically on the order of at least about 50 microns and typically about 50-200 microns. Accordingly, it can be appreciated that the manufacture of couplers for single mode fibers is a difficult undertaking since, because of the relatively small fiber size, it is relatively easy to destroy the waveguide path or core and/or detrimentally affect it and increase losses in transmission, the result of which is highly undesirable in the case of single mode fibers.

One prior art method of manufacturing a fiber optic coupling element of two monomode fibers is disclosed in U.S. Patent 3,902,786 to Brown. According to the teachings of Brown, the claddings of the single mode fibers are removed at the parts to be coupled, i.e., an etching process. The fibers are then positioned so that their bare cores contact each other and the bare cores are coated with a material whose refractive index is equal to that of the cladding material. This is a generally complicated method, and includes a number of disadvantages, both as to operation and results since single mode fibers are relatively small and the bare fiber cores are difficult to handle.

Another method of manufacturing single mode couplers is disclosed in U.S. Patent 4,054,366 to Barnosky et al. The method disclosed therein provides for heating the fiber claddings locally at an area at which the fibers are to fused by means of a laser. Specific requirements as to cladding, softening and melting temperatures are essential for the method of Barnosky to function effectively and thus, it too also complicates the manufacture of single mode couplers. More particularly, cladding and core materials are selected so that only the cladding melts without affecting the core paths.

As an improvement to the prior art, U.S. 4,490,163 to Jochem et al. provides a method wherein two single mode fibers are positioned so that their claddings are partially in contact with each other. As before, it is essential that the glass cladding have a softening temperature which is lower than the softening temperature of the glass core so that the glass core does not melt upon fusion. The fibers are heated where they contact each other to soften the glass claddings but not the cores, and then pressed toward each other to reduce the distance between the cores of the portions of the fibers which contact each other to fuse the two fibers together. As in the above-discussed Barnosky et al. case, this process is also relatively complicated in that specific requirements for the types of fibers are

-3-

**0234326**

necessary and further, the end result is that efficient coupling by merely pressing the two fiber cores together is still not achieved due to losses and irregularities which result.

## Summary of the Invention

In one aspect, the invention resides in an improvement in an optical fiber coupler made from at least two single mode fibers fused together into a coupling region. The improvement resides in that beginning at each end thereof, the coupling region comprises a first portion wherein the fibers are fused together and then tapered down into a fused portion which is a unitary uniform size coupling zone of predetermined length. In a preferred aspect, the unitary uniform size coupling zone of predetermined length has a substantially circular cross-section with the cores of the two fibers running therethrough in proximity to each other for a predetermined length.

In another aspect, the invention is directed to a method of making an optical fiber coupler made from at least two single mode fibers. The method in accordance with the invention comprises the step of positioning predetermined portions of at least two single mode fibers together such that their claddings are in contact. A ceramic member is heated with a laser light source to cause indirect heating of the predetermined portions of the two fibers. The fiber portions are moved in a reciprocal motion in proximity to the heated ceramic member at a rate sufficient to cause the predetermined portions of the fibers to fuse together. Thereafter, axial tension is applied to the fused region while continuing the reciprocal motion and heating to cause the fused region to taper down from the individual fibers into a reduced diameter region of predetermined length wherein the fibers are fused into a unitary region, which as discussed previously, is preferably of substantially circular cross-section.

In a more specific aspect, the axial tension and reciprocal motion is continued while monitoring throughput of light through the fibers and light coupling to a point wherein optimum light coupling is about to occur. The process is then terminated and the fibers allowed to cool into a single mode coupler.

Having briefly described the invention, the features and other advantages of the invention will become more readily apparent from the detailed description set forth hereinafter made with reference to the attached drawings.

## Brief Description of the Drawings

Figure 1 is a schematic side view of the coupler in accordance with the invention.

Figures 2a-2c are respectively cross-sectional views of the coupler of Figure 1 taken along lines AA, BB and CC.

Figure 3 is a schematic side view of a general coupler manufacturing arrangement in accordance with the invention.

Figures 4a and 4b show generally a sequence of steps involved in the manufacture of the coupler in accordance with the invention.

Figures 5a-5c show cross-sectional views of the structure of the ceramic member employed in the process of this invention.

## Detailed Discussion of the Invention

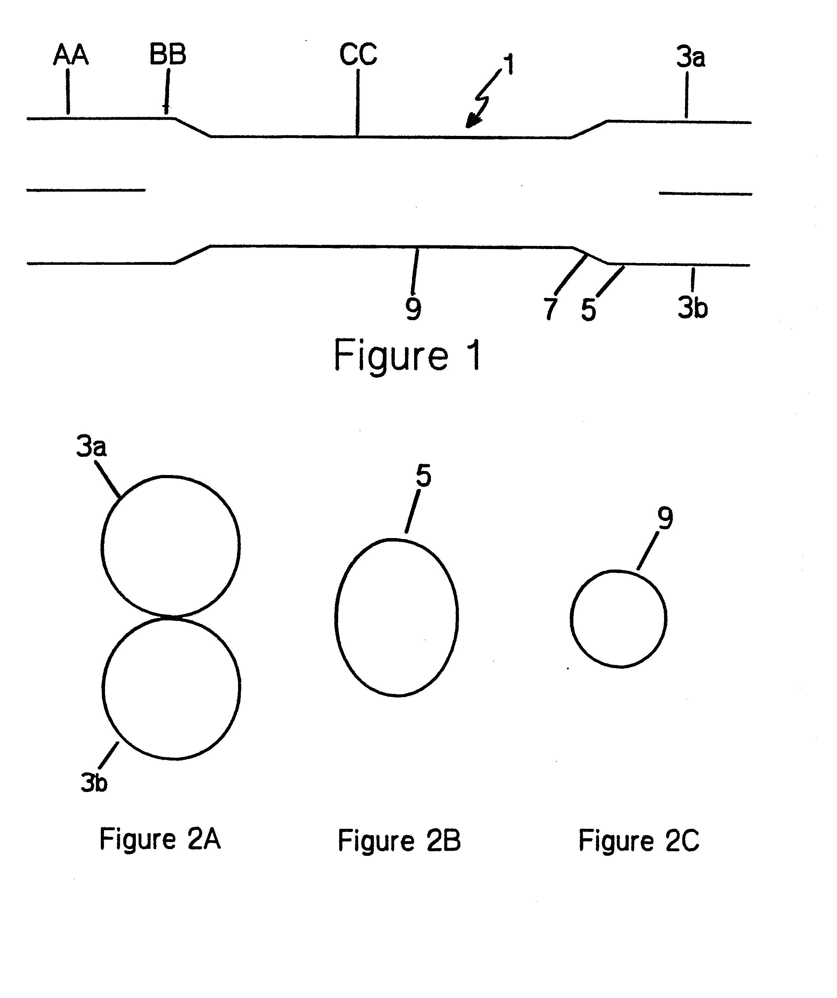

The single mode coupler in accordance with the invention is generally illustrated in Figure 1. As can be seen therein, the coupler 1 consists of a fiber pair 3 comprised of two single mode fibers 3a and 3b. These fibers 3a and 3b are single mode fibers of the type commercially available. Typically, these fibers are available as an assembly which includes a single mode fiber consisting of a glass core of predetermined and relatively high index of refraction surrounded by a glass cladding which is of relatively low index of refraction. This assembly further includes the fiber surrounded by a buffer or protective layer, e.g., an acrylate or silicone. In this regard, as previously noted in this application the terms "fiber" and "waveguide" will be used interchangeably to refer to the core and cladding which makes up the fiber. Both core and cladding are typically made of glass, e.g., fused silica, and merely have different indexes of refraction.

As shown in Figure 1, the fibers are fused together, as will be discussed hereinafter, in a manner such that from an initial fused region 5 they taper down at a tapered portion 7 into a unitary fusion zone 9 of predetermined length wherein the cross-section is such, as shown in Figures 2a-2c, that one can no longer identify the discrete fibers 3a and 3b. Instead, as shown in Figure 2c the unitary fusion zone 9 appears to be a discrete entity of predetermined length and of substantially circular cross-section. Coupling occurs within this region 9, it is believed primarily by means of evanescent wave coupling which provides for a predetermined distribution of energy between the two fibers. This aspect will be discussed later in the text. The cores of the two fibers pass through the reduced diameter zone 9.

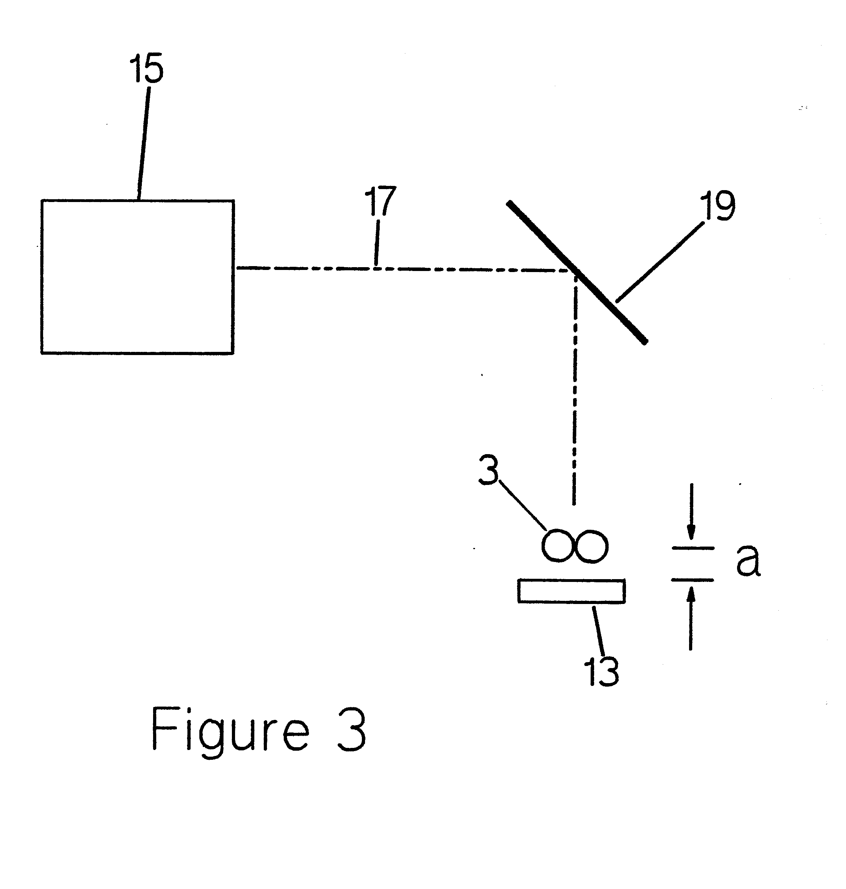

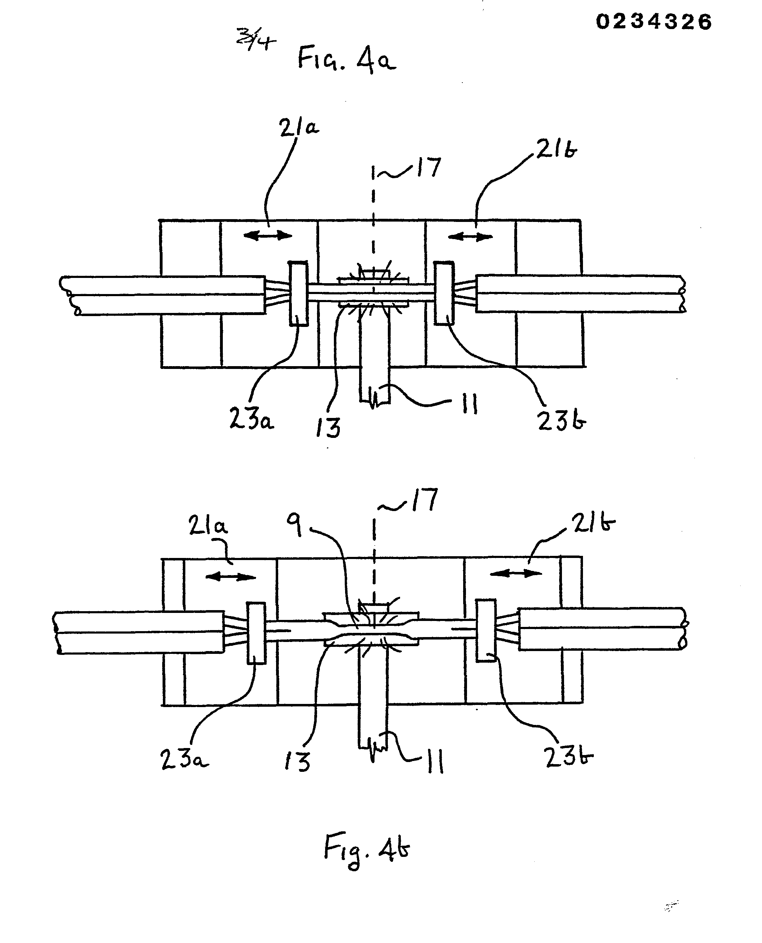

The device for manufacturing the coupler is generally shown in Figure 3 as well as in Figures 4a and 4b. Figures 4a and 4b also generally show the steps involved in the manufacture of the coupler.

As shown in Figure 3, the device for manufacturing the coupler generally includes a laser 15 which directs a laser beam 17, preferably to a mirror 19, which redirects it onto the fiber pair 3. The reason for use of the mirror is because it is desirable to keep the laser on a horizontal plane. However, this is not essential. Likewise, other beam delivery systems may be employed such as laser waveguides, lens and mirror systems, etc., as will be readily apparent to those of ordinary skill in the art. The beam, which is substantially larger in diameter than the fiber pair, simultaneously strikes the fiber pair 3, which is spaced a predetermined distance A, i.e., 1 to 2 mm, preferably .1 to .5 mm, most preferably .5 mm, from a ceramic member 13, and the ceramic member 13 and is simultaneously absorbed by each. Heating of fibers and of the ceramic member 13 occurs. The ceramic member 13 also in turn indirectly heats the fiber pair 3 to cause the fusing. All of the elements of the device are not shown in Figure 3 and some have been omitted for the sake of clarity in illustration.

As shown in Figures 4a and 4b, initially the beam 17 is incident onto the fiber pair 3 and heats the fiber pair 3 and the ceramic member 13 which is supported on a support 11. Grippers 23 are mounted on individually motor driven sliding members 21a and 21b, and hold the coupler pair of fibers 3a and 3b in contact over a predetermined length, typically about .5-3 cm, preferably about 2 cm. The fiber pair is reciprocated in a back and forth motion over the ceramic member 13 to cause fusion or fusing of the fiber pair 3 over a predetermined length portion. As shown in Figure 4b, once fusing of the fiber pair occurs, an axial tension is applied outerwardly to the fused pair to stretch the fibers and cause creation of a tapered region which projects into a predetermined length small diameter region 9 which is as long as 30 cm, typically about .75-20 mm, preferably about 4-15 mm and more preferably about 10 mm, as shown in Figures 1 and 4b, to result in the coupler. Throughput of light is measured while the coupler is being manufactured. When the desired state of energy distribution between the fibers is reached, the process is terminated and the coupler allowed to cool and removed from the fixture.

In a preferred aspect, the unitary zone of predetermined length has a diameter of about 40-80 ) , preferably about 60 ) . The core separation within the unitary zone 9 is preferably about 15-30 ) , more preferably about 20 ) . Furthermore, as a result of the tensioning, the cores extending through the zone 9 have a diameter of about 2-6 ) , preferably about 4 ) .

With respect to the axial tensions applied to the coupler during manufacturing, this is achieved by varying the speeds of the motors driving the reciprocating block 21a and 21b such that scanning is maintained while at the same time achieving increased relative separation between the blocks 21a and 21b. The variation in speed adjustment is made in a manner which will be readily apparent to those of ordinary skill in this art.

With respect to the scanning motion to achieve heating, it will also be readily appreciated that instead of scanning the fiber over the ceramic member, it is also possible to reverse this and to move the laser source itself. This laser is, for example, preferably a $CO_2$ laser of the type commercially available from Apollo Lasers Company as the Model 580 which operates at 80 watts maximum power, and typically in the 30-40 watt range. The fibers employed are typically single mode fibers of the type commercially available from, e.g., Corning Inc., as SMF optical waveguides which typically have an outer diameter of about 125 ) and a core diameter of about 8.7 ) .

The process itself can be computer controlled in a manner which will be readily apparent to those of ordinary skill in the art. More particularly, the temperature at the ceramic member can be monitored by a conventional silicon detector whose output voltage representative of ceramic member luminescence is measured during heating. Depending on measured output, the laser power is adjusted to cause the measured output from the sensor to fall within predetermined ranges.

Having described the invention, the following table sets forth the cycles and process conditions in one example of the use of the process in accordance with the invention employed to manufacture a single mode coupler.

Table

| Cycle | mm Scan Motor Distance | mm Draw Motor Distance | mm/sec Scan Vel. | mm/sec Draw Vel. | CO$_2$ Laser/ Power (ceramic detector luminescence voltage) | Individual Cycle Run Time (Sec) | Cumulative Total Run Time (Sec) |
|---|---|---|---|---|---|---|---|
| 1 | 0 | 0 | 0.4 | 0.11 | 1 | 5 | 0 |
| 2 | -2.5 | 0 | 0.4 | 0.11 | 1 | 6.62 | 5 |
| 3 | 2.4 | 0 | 0.4 | 0.11 | .25 | 12.62 | 11.62 |
| 4 | -2.4 | 0 | 0.4 | 0.11 | .29 | 12.37 | 24.24 |
| 5 | 2.4 | 0 | 0.4 | 0.11 | .305 | 12.37 | 36.61 |
| 6 | -2.7 | 0 | 0.4 | 0.11 | .322 | 13.12 | 48.98 |
| 7 | 2.7 | 0 | 0.4 | 0.11 | .334 | 13.87 | 62.1 |
| 8 | -2.7 | 0 | 0.4 | 0.11 | .339 | 13.87 | 75.97 |
| 9 | 2.1 | 0 | 0.4 | 0.11 | .342 | 12.37 | 89.84 |
| 10 | -1.8 | 0 | 0.4 | 0.11 | .344 | 10.12 | 102.21 |
| 11 | 2.15 | 0.75 | 0.35 | .066455 | .345 | 11.65571 | 112.33 |
| 12 | -1.4 | 1.75 | .23075 | .065 | .348 | 15.75461 | 123.9857 |
| 13 | 3.75 | 2.75 | .33475 | .065 | .35 | 15.75461 | 139.7403 |
| 14 | -1 | 3.75 | .30875 | .065 | .35 | 15.75461 | 155.4949 |
| 15 | 5.35 | 4.75 | .38735 | .061 | .35 | 16.76344 | 171.2495 |
| 16 | -0.6 | 5.75 | .357 | .06 | .35 | 17.03666 | 188.0130 |
| 17 | 6.7 | 6.5 | .399066 | .041 | .35 | 18.66268 | 205.0496 |
| 18 | -0.2 | 7.25 | .3864 | .042 | .35 | 18.22714 | 223.7123 |
| 19 | 8.05 | 8.25 | .396 | .048 | .35 | 21.20333 | 241.9394 |
| 20 | 0.2 | 9.25 | .35324 | .045 | .35 | 22.59222 | 263.1428 |
| 21 | 9.9 | 10.5 | .31816 | .041 | .35 | 30.85780 | 285.7350 |
| 22 | 0.6 | 11.75 | .30504 | .041 | .348 | 30.85780 | 316.5928 |

Table (continued)

| Cycle | mm Scan Motor Distance | mm Draw Motor Distance | mm/sec Scan Vel. | mm/sec Draw Vel. | CO$_2$ Laser/Power (ceramic detector luminescence voltage) | Individual Cycle Run Time (Sec) | Cumulative Total Run Time (Sec) |
|---|---|---|---|---|---|---|---|
| 23 | 12 | 13 | .3192 | .035 | .348 | 36.08428 | 347.4506 |
| 24 | 1 | 14.25 | .2992 | .034 | .348 | 37.13470 | 383.5349 |
| 25 | 14.1 | 15.5 | .3144 | .03 | .348 | 42.03666 | 420.6696 |
| 26 | 1.4 | 18.5 | .127 | .03 | .345 | 100.37 | 462.7063 |
| 27 | 0 | 18.5 | .127 | .005 | .2 | 30 | 563.0763 |

While in the above example and in the preceding text the fibers employed and specific devices employed in the manufacture have been specifically identified, it will be readily appreciated that other conventional commercially available single mode fibers and devices can be employed interchangeably.

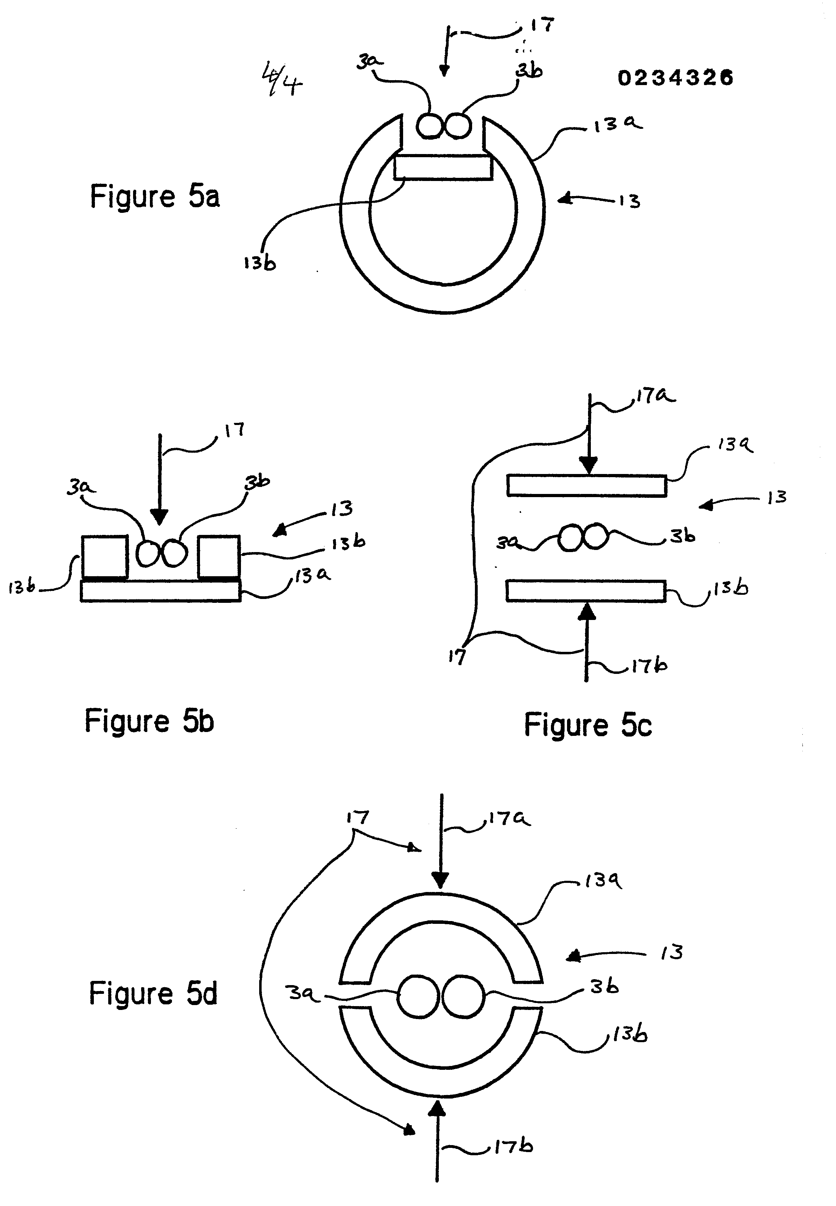

While in the apparatus the ceramic member 13 has been shown as a flat piece, Figures 5a-5d show various alternative and preferred constructions.

More specifically, Figure 5a illustrates the construction of the ceramic member 13 employed in the above example. This member 13 is a two-part member 13a and 13b with the fibers 3a and 3b positioned spaced above the part 13b such that the laser beam 17 impinges on the fibers 3a and 3b and on member 13b, which in combination with member 13a creates an oven-like uniform heating effect. Alternative constructions including employing two laser beams 17a and 17b are shown in Figures 5b-5d. In Figure 5d, it is contemplated that only the ceramic members 13a and 13b would be heated to indirectly heat the fibers 3a and 3b.

In the manufacturing process, light is transmitted into one of the fibers during fusing and drawing and output is monitored for each fiber at the output end by a conventional light sensor. Accordingly, the degree of fusing, stretching of the fibers during manufacture of the coupler is dependent on the desired amount of energy distributed between fibers. When a desired distribution, as measured at the output ends, is reached, the process is terminated.

Finally, although the process has been described with respect to two fibers, it is also possible to manufacture couplers with three, four and even more fibers.

The foregoing description has set forth details of a preferred form of single mode fiber coupler in accordance with the invention. Variations and alternative forms and all such changes and modifications as will be apparent to those of ordinary skill in the art, and which fall within the scope of the claims, are intended to be encompassed herein.

-11-

0234326

What is claimed is:

1. In an optical fiber coupler made from at least two single mode fibers fused together into a coupling region, the improvement wherein, beginning at each end thereof, the coupling region comprises a first portion wherein the fibers are fused together and then taper down into a fused portion which is a unitary uniform size coupling zone of predetermined length.

2. A coupler as in claim 1 wherein the outer diameter of said unitary zone is about 40-80 $\mu$ .

3. A coupler as in claim 1 wherein core separation in said unitary zone is about 15-30 $\mu$ .

4. A coupler as in claim 1 wherein the diameter of said cores in said unitary zone is about 2-6 $\mu$ .

5. A coupler as in claim 1, wherein the diameter of said cores in said unitary zone is about 2-6 $\mu$ .

6. A coupler as in claim 2, wherein the diameter of said cores in said unitary zone is about 2-6 $\mu$ .

7. A method of making an optical fiber coupler made from at least two single mode fibers, the method comprising the steps of:

positioning predetermined portions of at least two single mode fibers together such that their claddings are in contact;

heating said fibers and a ceramic member directly in proximity to said fibers with a laser source to cause both direct and indirect heating of said predetermined portions of said at least two fibers;

moving said predetermined portions of said fibers or said laser source in a reciprocal motion across and in proximity to said ceramic member at a rate sufficient to cause said predetermined portions of said fibers to fuse together into a fused region; and

applying axial tension to said fused region while continuing said reciprocal motion and heating to cause said fused region to taper down from said individual fibers into a reduced diameter region of predetermined length, wherein the fibers are fused into a unitary region.

8. A method as in claim 7 wherein said ceramic member is a two-part member, one part being of circular cross-section and open at the top, and the other part being flat and located within the one part wherein heating of the fibers occurs in part by heat radiation from substantially all directions around the fibers.

9. A method as in claim 7 wherein the axial tension applied to said fused region is sufficient to cause the unitary fiber region to stretch without breaking.

10. A method as in claim 7 wherein the power of said laser source is controlled to fall within predetermined values.

0234326

AA          BB                    CC                    1                              3a

9                    7   5        3b

## Figure 1

3a

5

9

3b

Figure 2A                Figure 2B                Figure 2C

Figure 3

Fig. 4a

Fig. 4b

0234326

**Figure 5a**

**Figure 5b**

**Figure 5c**

**Figure 5d**